# EUROPÄISCHE PATENTSCHRIFT

(11) **EP 2 448 976 B1**
(45) Veröffentlichungstag und Bekanntmachung des Hinweises auf die Patenterteilung: **04.12.2013**
(21) Anmeldenummer: 10725199.3
(22) Anmeldetag: 22.06.2010
(51) Int. Cl.: C08G 65/336, C08F 8/30, C09J 171/02

(54) **ALKOXYSILANTERMINIERTE POLYMERE ENTHALTENDE KLEB- ODER DICHTSTOFFMASSEN**
ADHESIVE OR SEALING COMPOUNDS CONTAINING ALKOXYSILANE-TERMINATED POLYMERS
MATIÈRES ADHÉSIVES OU D'ÉTANCHÉITÉ CONTENANT DES POLYMÈRES À TERMINAISON ALCOXYSILANE

(30) Priorität: 30.06.2009 DE 102009027357
(43) Veröffentlichungstag der Anmeldung: 09.05.2012
(73) Patentinhaber: Wacker Chemie AG, 81737 München (DE)
(72) Erfinder: SCHINDLER, Wolfram, 84577 Tüßling (DE); STANJEK, Volker, 84539 Ampfing (DE)
(74) Vertreter: Deffner-Lehner, Maria
(86) Internationale Anmeldenummer: PCT/EP2010/058795
(87) Internationale Veröffentlichungsnummer: WO 2011/000737

(56) Entgegenhaltungen:
- EP-A1- 0 824 574
- EP-A1- 1 421 129
- EP-A1- 1 743 008
- EP-A1- 1 746 133

## Beschreibung

Die Erfindung betrifft zweikomponentige Kleb- oder Dichtstoffmassen auf Basis von silanterminierten Prepolymeren.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Kleb- und Dichtstoffen, insbesondere von elastischen Klebesystemen.
So zeigen Klebstoffe auf Basis von alkoxysilanvernetzenden Polymeren im ausgehärteten Zustand nicht nur sehr gute Haftungseigenschaften auf den unterschiedlichsten Substraten sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die nur durch Kontakt mit der Luftfeuchtigkeit aushärten. Die entscheidenden Vorteile von einkomponentigen Systemen ist vor allem deren sehr leichte Applizierbarkeit, da hier keine Mischung verschiedener Klebstoffkomponenten durch den Anwender erforderlich ist. Neben der zeit-/Arbeitsersparnis und der sicheren Vermeidung eventueller Dosierungsfehler, ist bei einkomponentigen Systeme auch nicht die Notwendigkeit gegeben, den Kleb-/Dichtstoff innerhalb eines meist recht engen Zeitfensters zu verarbeiten, wie dies bei zweikomponentigen Systemen (2K-Systemen) nach erfolgter Durchmischung der beiden Komponenten der Fall ist.

Allerdings besitzen 1K-Systeme den entscheidenden, systemimmanenten Nachteil, nur bei Kontakt mit (Luft)feuchtigkeit auszuhärten. Bei tiefen Fugen und/oder großflächigen Verklebungen führt dies zu einer extrem langsamen Härtung von "außen nach innen", die ob der zunehmend langen Diffusionswege um so langsamer verläuft, je weiter die Härtung vorangeschritten ist. Dies gilt insbesondere bei der Verklebung nicht-poröser Substrate (Kunststoffe, Stahl und sonstige Metalllegierungen, Lackoberflächen, Glas und glasierte Oberflächen etc.), bei denen dieses Problem auch nicht durch ein vorheriges gleichmäßiges Anfeuchten der Klebefläche gelöst werden kann. Folge ist eine geringe Anfangsfestigkeit, die gegebenenfalls sogar eine Fixierung der zu verklebenden Teile erforderlich macht, auf jeden Fall aber eine volle Belastung der Klebefläche über Tage oder sogar Wochen unmöglich macht. Bei entsprechenden Verfugungen und Verklebungen ist somit der Einsatz von 2K-Systemen vorteilhaft bzw. oftmals sogar schlicht unumgänglich.

2K-Klebstoffsysteme auf Basis silanvernetzender Prepolymere wurden bereits in EP 227 936 B1, EP 824 574 B1 sowie in WO 2008/153392 A1 offenbart. Die entsprechenden Systeme basieren auf den sogenannten MS-Polymeren (silanterminierte Polyether der Fa. Kaneka), wie in EP 824 574 B, oder aber auf SPUR-Polymeren (silanterminierten Polyurethane auf Basis von aminoalkylfunktionellen Silanen, Diisocyanaten und Polyethern), wie in EP 227 936 B1 und WO 2008/153392 A1, und weisen Endgruppen der Formel (I)

- (CH₂)₃-Si(CH₃)(OCH₃)₂ (I)

auf. Die MS- und/oder SPUR-Polymere werden dabei mit Weichmachern, Füllstoffen, Zinnkatalysatoren sowie weiteren Komponenten wie z. B. Stabilisatoren zu einer ersten Komponente verarbeitet werden. Als zweite Komponente dient eine pastöse, wasserhaltige Mischung, die neben Wasser typischerweise Kreide, Dickungsmittel, wie z. B. Cellulosederivate, sowie gegebenenfalls auch noch weitere Komponenten enthält.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren. Wird die Reaktivität bei 2K-Systemen sehr langsam eingestellt, um eine ausreichend lange Verarbeitungszeit zu erhalten, kann es zu zusätzlich zu Problemen bei der Aushärtung kommen. So können kleinere Anwendungsfehler hier schon zu deutlichen Störungen bei der Aushärtung führen.

Ein weiterer Nachteil einer derartigen aggressiven (Zinn-)Katalyse stellen die negativen Auswirkungen der entsprechenden Katalysatoren auf die Lagerstabilität der entsprechenden Massen dar. So können diese hochreaktiven Katalysatoren einerseits Neben- bzw. Abbaureaktionen der silanterminierten Polymere katalysieren, andererseits bauen sich in der Regel katalytisch aktive Zwischenstufen im Laufe der Zeit in den Formulierungen erst auf bzw. auch nach längere Zeit wieder ab. Im ersten Fall wirken sich die Katalysatoren zum Beispiel negativ auf Thermostabilität der entsprechenden Klebstoffe aus. Typische Abbaureaktionen sind dabei vor allem die bei SPUR-Polymeren auftretende Spaltung der Urethan- und/oder Harnstoffeinheiten im Prepolymerrückgrat wie auch die - wenngleich meist langsamer verlaufende - Spaltung der in den Polymeren enthaltenen Ethersowie der gegebenenfalls ebenfalls vorhandenen Esterbindungen.

Im letztern Fall wird die Härtungsgeschwindigkeit und auch die offenen Zeiten der 2K-Formulierung sich im Laufe der Lagerung ändern. Damit kann der Anwender die Verarbeitungszeit nicht mehr abschätzen, da sie von der Lagerdauer des Produkts abhängt. Dies ist speziell für automatisierte Prozesse nicht akzeptabel.

Weiterer Nachteil an den bisher beschriebenen silanterminierten Polymeren ist eine vielfach unvollständige Silanterminierung der Kettenenden. Daher enthalten diese Materialien unreaktive und damit im ausgehärteten Zustand unvernetzte Kettentermini, was zu mäßigen mechanischen Eigenschaften und einer Restklebrigkeit führen kann, die auch nach der Härtung erhalten bleibt.

Aminosilan-terminierte "SPUR-Polymere" hingegen besitzen den nicht minder entscheidenden Nachteil einer relativ hohen Viskosität, die durch die in dem Material enthaltenen Urethan- und Harnstoffbindungen hervorgerufen wird. Diese bilden über Wasserstoffbrückenbindungen sogenannte "Polyurethan-Hardblöcke", die sich selbstverständlich nicht erst im ausgehärteten Material sondern ebenso bereits im (zäh-)flüssigen Prepolymer ausbilden und deren Viskosität zum Teil dramatisch erhöhen. Diese hohe Viskosität ist für 2K-Systeme sehr nachteilig, weil dies eine gleichmäßige Durchmischung der beiden Komponenten erschwert.

Es bestand die Aufgabe zweikomponentige Kleb- oder Dichtstoffe auf Basis silanterminierter Polymere bereitzustellen, mit denen die Nachteile des Standes der Technik überwunden werden können. Ziel war hier nicht nur eine einfache und zuverlässige Katalyse, sondern auch Formulierungen die in der Reaktivität über die Lagerung hinweg keine größeren Änderungen aufweisen. Daneben sollten die beiden Komponenten einfach mischbar sein ohne größere Einflüsse auf die Aushärtung.

Gegenstand der Erfindung sind zweikomponentige Kleb- oder Dichtstoffmassen (K) mit einer ersten Komponente (K1) enthaltend silanterminierte Prepolymere (A), die Endgruppen der allgemeinen Formel (II)

-O-CO-NH-(CH₂)_{y}-SiR²₃₋ₓ(OR¹)ₓ (II)

aufweisen, wobei
- **R¹** und **R²**: unabhängig voneinander Kohlenwasserstoffreste mit 1-18 Kohlenstoffatomen oder ω-Oxaalkyl-alkylreste mit insgesamt 2-20 Kohlenstoffatomen bedeuten,
- **x**: 2 oder 3 bedeutet und
- **y**: eine Zahl von 1 bis 10 bedeutet,
und einer zweiten Komponente (K2) enthaltend Wasser,
mit der Maßgabe, dass mindestens 50% aller Prepolymermoleküle (A) im Rückgrat der Prepolymerkette keine zusätzlichen Urethan- oder Harnstoffeinheiten aufweisen.

Bei den Resten **R¹** und **R²** handelt es sich bevorzugt um Kohlenwasserstoffreste mit 1 bis 6 Kohlenstoffatomen, insbesondere um Alkylreste mit 1 bis 4 Kohlenstoffatomen.
**R²** ist bevorzugt ein Methylrest.
**R¹** ist bevorzugt ein Methyl- oder Ethylrest.
**y** ist vorzugsweise 1 oder 3.

Beispiele für R¹ und R² sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Vorzugsweise enthalten mindestens 70%, bevorzugt mindestens 90% aller Prepolymermoleküle (A) in ihrem Rückgrat keine zusätzlichen Urethan- oder Harnstoffeinheiten. Besonders bevorzugt enthalten sämtliche Prepolymermoleküle in ihrem Rückgrat keine zusätzlichen Urethan- oder Harnstoffeinheiten.

Beim den Prepolymeren (A) handelt es sich vorzugsweise um silanterminierte Polyether, d.h. um Moleküle, deren Polymerrückgrat ausschließlich aus Polyethern besteht. Die mittleren Molmassen Mₙ (Mₙ = Zahlenmittel) der Prepolymere (A) liegen vorzugsweise zwischen 3200 und 22500 g/mol, wobei mittlere Molmassen von 8200 bis 20500 g/mol bevorzugt und mittlere Molmassen von 10200 bis 18500 g/mol besonders bevorzugt sind.

Bevorzugt enthalten Prepolymere (A) Endgruppen der allgemeinen Formel (III)

-O-CO-NH- (CH₂)-SiR²₃₋ₓ(OR¹)ₓ (III),

wobei **R¹, R²** und **x** die bei Formel (II) angegebene Bedeutung haben.

Die zweite Komponente (K2) enthält neben Wasser vorzugsweise auch ein Verdickungsmittel (V). Sie ist vorzugsweise pasten- oder gelförmig.

Die erfindungsgemäßen Massen (K) haben den Vorteil, das silanfunktionelle Prepolymere (A) mit Endgruppen der Formel (II) bzw. (III) trotz vergleichsweise niedriger Prepolymerviskositäten zu klebfreien Massen mit guter Mechanik aushärten. Zudem zeigen sie in zweikomponentigen Systemen eine wesentlich schnellere Härtung, als dies von den im Stand der Technik beschriebenen Systemen bekannt ist. Dies gilt insbesondere für Prepolymere (A) mit Endgruppen der Formel (III), weswegen zweikomponentige Kleb- oder Dichtstoffe (K) auf dieser Prepolymerbasis auch besonders bevorzugt sind. Die hohe Härtungsgeschwindigkeit erlaubt nicht nur eine sehr frühe mechanische Belastbarkeit der Klebenaht oder Klebefläche, was insbesondere in industriellen Prozessen - z. B. in der Fahrzeugindustrie - eine schnelle Produktion und hohe Stückzahlen pro Zeiteinheit erlaubt, sondern ermöglicht auch den Verzicht auf toxikologisch bedenkliche Zinnkatalysatoren. Weiterhin wurde gefunden, dass nach Lagerung der beiden Komponenten praktisch keine Veränderung der Härtungszeiten (bzw. Topfzeiten) erkennbar ist. Diese Veränderung wird vielfach an kommerziellen Produkten mit Polymeren nach bisherigem Stand der Technik bemängelt. Ein weiterer positiver Effekt aus der günstigen und verlässlichen Mischbarkeit und Katalyse ist, dass sich die mechanischen Eigenschaften der zweikomponentigen Massen kaum von denen einer analogen einkomponentigen Masse (gehärtet ohne Zusatz von Wasser nur über Luftfeuchtigkeit) unterscheiden.

Daher enthalten die erfindungsgemäßen Kleb- oder Dichtstoffmassen (K) vorzugsweise so geringe Mengen an Zinnkatalysatoren, dass der Zinngehalt höchstens 100 Gew.-ppm, bezogen auf das Gesamtgewicht der Masse (K), beträgt. Dabei ist es gleichgütig, ob sich der oder die Zinnkatalysatoren in der Komponente (K1) oder (K2) oder in beiden Klebstoffkomponenten befindet. Bevorzugt sind die erfindungsgemäßen Kleb- oder Dichtstoffe (K), vollständig frei von zinnhaltigen Katalysatoren, insbesondere organischen Zinnverbindungen. Besonders bevorzugt sind die erfindungsgemäßen Kleb- oder Dichtstoffmassen (K) frei von jeglichen schwermetallhaltigen Katalysatoren. Unter Katalysatoren sind in diesem Zusammenhang Verbindungen zu verstehen, die in der Lage sind, die Aushärtung der Kleb- oder Dichtstoffmassen (K) zu katalysieren.

Bei einer bevorzugten Herstellungsweise der Polymere (A) wird ein Silan (A1) eingesetzt, das ausgewählt wird aus Silanen der allgemeinen Formeln (IV)

OCN-(CH₂)-SiR²₃₋ₓ(OR¹)ₓ (IV),

wobei **R¹, R²** und **x** die bei Formel (II) angegebene Bedeutung haben.

Das Silan (A1) wird vorzugsweise mit einem oligomeren oder polymeren Di-, Tri- oder Tetraol (A2) umgesetzt, wobei Diole besonders bevorzugt werden. Vorzugsweise werden als Verbindungen (A2) mit Hydroxylgruppen terminierte, unverzweigte, langkettige Polyether der allgemeinen Formel

HO-Z-OH (V),

eingesetzt, wobei Z ein Polyetherrest,
vorzugsweise ein Rest der Formel -(R³O)ₘ- ist, wobei
- **R³**: gleich oder verschieden sein kann und ggf. substituierte Kohlenwasserstoffreste, vorzugsweise Methylen-, Ethylen- oder 1,2-Propylenreste, bedeutet, und
- **m**: eine ganze Zahl ist.

Besonders bevorzugt sind unverzweigte langkettige Polypropylenglycole. Die mittleren Molmassen Mₙ (Mₙ = Gewichtsmittel) dieser vorzugsweise eingesetzten Polyether (A2) liegen zwischen 3500 und 22000 g/mol, wobei mittlere Molmassen von 8000 bis 20000 g/mol bevorzugt und mittlere Molmassen von 10000 bis 18000 g/mol besonders bevorzugt sind. Beispiele für besonders geeignete Polyole (A2) sind kommerziell erhältlich unter der Marke "Acclaim^{®} 12200, Acclaim^{®} 18200 von der Bayer MaterialSience AG, Deutschland.

Die Stöchiometrien der Reaktionspartner (A1) und (A2) werden dabei so gewählt, dass mehr als 85% aller Kettenenden, vorzugsweise mehr als 90% und besonders bevorzugt mehr als 95% aller Kettenenden mit Silanfunktionen terminiert werden. Diese vollständige bzw. nahezu vollständige Terminierung der Kettenenden führt dabei überraschenderweise zu einer deutlichen Verbesserung der mechanischen Eigenschaften der auf diesen Materialien basierenden ausgehärteten Massen (K) im Vergleich zu den in EP 824 574 B1 beschriebenen Massen auf Basis herkömmlicher MS-Polymere.

Vorzugsweise handelt es sich bei den Polyethern (A2) um langkettige Polypropylenglycole ohne zusätzliche Urethan- und/oder Harnstoffeinheiten im polymeren Rückgrat. Somit werden bei deren Umsetzung mit den Silanen (A1) keine silanterminierten Polyurethane erhalten, sondern Prepolymere (A), die lediglich exakt zwei Urethaneinheiten pro Molekül enthalten. Da aus dem bevorzugten Einsatz von Polypropylenglycolen (A2) mit den o. g. hohen Molmassen sehr hochmolekulare Prepolymere (A) resultieren, haben diese zwei Urethaneinheiten pro Molekül praktisch keinen Einfluss auf die Viskosität der entsprechenden Materialien. Die bei den in WO 2008/153392 A1 beschriebenen SPUR-Prepolymeren auftretende Ausbildung von Polyurethan-Hardblöcken unterbleibt hier. Die resultierenden erfindungsgemäßen Prepolymere (A) sind demnach deutlich niederviskoser bei gleichem Molekulargewicht. Die erfindungsgemäßen ausgehärteten Dicht- oder Klebstoffe (K) hingegen weisen - trotz des Verzichtes auf die o. g. Polyurethan-Hardblöcke - überraschend gute und vergleichbare mechanische Eigenschaften auf.

Vorzugsweise werden daher als silanterminierte Prepolymere (A) silanterminierte Polyether der allgemeinen Formel

(R¹O)ₓR²₃₋ₓSi-(CH₂)-NH-CO-O-Z-O-CO-NH-(CH₂)-SiR²₃₋ₓ(OR¹)ₓ (VI)

eingesetzt, wobei **R¹, R²** und **x** die bei Formel (II) angegebene Bedeutung haben und **Z ein** Polyetherrest ist und vorzugsweise die bei Formel (V) angegebene Bedeutung hat.

Vorzugsweise besitzen die erfindungsgemäßen Prepolymere (A) im unverdünnten Zustand Viskositäten von höchstens 50 Pas bei 25°C, bevorzugt höchstens 35 Pas bei 25°C, und vorzugsweise mittlere Molekülmassen Mₙ von 15.000 bis 20.000 g/mol, besonders bevorzugt Viskositäten von höchstens 25 Pas bei 25°C, insbesondere höchstens 15 Pas bei 25°C, und bevorzugt mittlere Molekülmassen Mₙ von 10.000 bis 15.000 g/mol. Derart niedrige Viskositäten können mit den im Stand der Technik beschriebenen SPUR-Polymeren bei vergleichbaren Molmassen nicht erreicht werden.

Bei der Herstellung des Prepolymeren (A) sind die Konzentrationen aller an sämtlichen Reaktionsschritten beteiligter Isocyanatgruppen und aller isocyanatreaktiver Gruppen sowie die Reaktionsbedingungen bevorzugt so gewählt, dass im Laufe der Polymersynthese sämtliche Isocyanatgruppen abreagieren. Das fertige Polymer (A) ist somit bevorzugt isocyanatfrei. Die Isocyanatfreiheit kann dabei auch erreicht werden, indem man die Isocyanatosilane (A1) im Verhältnis zum Polyol (A2) zwar im Überschuss einsetzt, aber nach der Silanterminierung die überschüssigen Isocyanatgruppen durch Zugabe einer weiteren isocyanatreaktiven Komponenten, z. B. eines Alkohols, wie Methanol oder Ethanol, abfängt.

Die Herstellung der Prepolymere (A) erfolgt vorzugsweise in Gegenwart eines Katalysators. Sie kann kontinuierlich oder diskontinuierlich erfolgen. Geeignete Katalysatoren, Prozesse und Reaktionsbedingungen zur Herstellung der Prepolymere (A) sind beispielsweise in DE 10 2005 029 169 A1 sowie in US 2005/0119436 A beschrieben.

Bei den erfindungsgemäßen zweikomponentigen Kleb- und Dichtstoffmassen (K) enthält die Komponenten (K1) neben dem silanterminierten Prepolymer (A) vorzugsweise auch Kondensationskatalysatoren (KK), Wasserfänger und Silanvernetzer (S), Füllstoffe (F), Weichmacher (W), Haftvermittler (H), Rheologiehilfsmittel (R) und Stabilisatoren (St), gegebenenfalls zusätzlich auch noch Farbpigmente sowie weitere übliche Hilf- und Zusatzstoffe.

Als Kondensationskatalysatoren (KK) können dabei beispielsweise Titanatester, wie Tetrabutyltitanat, Tetrapropyltitanat, Tetraisopropyltitanat, Tetraacetylacetonat-titanat; Zinnverbindungen, wie Dibutylzinndilaurat, Dibutylzinnmaleat, Dibutylzinndiacetat, Dibutylzinndioctanoat, Dibutylzinnacetylacetonat, Dibutytzinnoxid, oder entsprechende Verbindungen des Dioctylzinn;
basische Katalysatoren, z. B. Aminosilane wie Aminopropyltrimethoxysilan, Aminopropyltriethoxysilan, Aminopropyl-methyldimethoxysilan, Aminopropylmethyldiethoxy-silan, N-(2-Aminoethyl)-aminopropyltrimethoxysilan, N-(2-Aminoethyl)-aminopropyltrimethoxysilan, N-(2-Aminoethyl)-aminopropyl-triethoxysilan, N-(2-Aminoethyl)-aminopropyl-methyldimethoxy-silan, N-Cyclohexylaminomethyltriethoxysilan, N-Cyclohexyl-aminomethyl-methyldiethoxysilan, N-Cyclohexylaminomethyltrimethoxysilan, N-Cyclohexylaminomethyl-methyldimethoxysilan und andere organische Amine, wie Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethyl-phenlyamin, N-Ethylmorpholinin etc.
oder saure Katalysatoren, wie Phosphorsäure- bzw. Phosphorsäureester, Toluolsulfonsäuren, Mineralsäuren dienen,
wobei schwermetallfreie Katalysatoren bevorzugt werden.

Die Kondensationskatalysatoren (KK) werden vorzugsweise in Konzentrationen von 0,01 - 10 Gew.-%, bevorzugt 0,1 - 2 Gew.-%, jeweils bezogen auf das Gesamtgewicht der Komponente (K1) eingesetzt. Die verschiedenen Katalysatoren können sowohl in reiner Form als auch als Mischungen verwendet werden.

Als Wasserfänger und Silanvernetzer (S) können beispielsweise Vinylsilane, wie Vinyltrimethoxy-, Vinyltriethoxy-, Vinylmethyldimethoxy-, Glycidoxypropyltrimethoxysilan, Glycidoxypropyltriethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, allgemein Alkylalkoxysilane oder aber auch weitere organofunktionelle Silane dienen. Selbstverständlich können hier auch dieselben Aminosilane eingesetzt werden, die bereits bei den Kondensationskatalysatoren (KK) beschrieben worden sind. Diese Silane nehmen dann oft eine Doppelfunktion als Katalysator und Vernetzersilan ein. Sämtlichen Silanvernetzer (S) - insbesondere sämtliche Silane mit Amino- oder Glycidoxyfunktionen - können zudem auch als Haftvermittler fungieren.

Die Wasserfänger und Silanvernetzer (S) werden vorzugsweise in Konzentrationen von 0,1 - 10 Gew.-%, bevorzugt 0.5 - 2 Gew.-%, jeweils bezogen auf das Gesamtgewicht der Komponente (K1) eingesetzt.

Als Füllstoffe (F) können beispielsweise Kalciumcarbonate in Form von natürlichen gemahlenen Kreiden, gemahlenen und beschichteten Kreiden, gefällten Kreiden, gefällten und beschichteten Kreiden, Tonmineralien, Bentonite, Kaoline, Talkum, Titandioxide, Aluminiumoxide, Aluminiumtrihydrat, Magnesiumoxid, Magnesiumhydroxid, Ruße, gefällte oder pyrogene, hydrophile oder hydrophobe Kieselsäuren dienen.
Bevorzugt werden Kalciumcarbonate und gefällte oder pyrogene, hydrophile oder hydrophobe Kieselsäuren, besonders bevorzugt pyrogene, hydrophile oder hydrophobe Kieselsäuren, insbesondere pyrogene, hydrophobe Kieselsäuren als Füllstoff (F) verwendet.

Die Füllstoffe (F) werden vorzugsweise in Konzentrationen von 10 - 70 Gew.-%, bevorzugt 30 - 60 Gew.-%, jeweils bezogen auf das Gesamtgewicht der Komponente (K1) eingesetzt.

Als Weichmacher (W) können beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Sulfonsäureester, Polyester, Polyether, wie Polyethylenglycol und Polypropylenglykol, Polystyrole, Polybutadiene, Polyisobutene, paraffinische Kohlenwasserstoffe, höhere, verzweigte Kohlenwasserstoffe etc. dienen.

Die Weichmacher (W) werden vorzugsweise in Konzentrationen von 0 bis 40 Gew.-%, bezogen auf das Gesamtgewicht der Komponente (K1) eingesetzt.

Als Rheologiehilfsmittel (R) können, z.B. Thixotropiermittel eingesetzt werden. Beispielhaft genannt seine hier hydrophile pyrogene Kieselsäuren, beschichtete hydrophobe pyrogene Kieselsäuren, gefällte Kieselsäuren, Polyamidwache, hydrierte Ricinusöle, Stearatsalze oder gefällte Kreiden. Auch die o. g. Füllstoffe können zur Einstellung der Fließeigenschaften benutzt werden.

Die Thixotropiermittel werden vorzugsweise in Konzentrationen von 1 - 5 Gew.-%, bezogen auf das das Gesamtgewicht der Komponente (K1) eingesetzt.

Als Stabilisatoren (St) können beispielsweise Antioxidantien oder Lichtschutzmittel, wie sogenannte HALS-Stabilisatoren, sterisch gehinderte Phenole, Thioether oder Benzotriazolderivate verwendet werden.

Zudem kann die Komponente (K1) auch noch Fungizide, Biozide, Flammschutzmittel, Pigmente etc. enthalten.

Der Anteil an alkoxysilanterminierten Prepolymeren (A) in der Komponente (K1) beträgt vorzugsweise 10 - 70 Gew.-%, bevorzugt 15 - 50 Gew.-%, besonders bevorzugt 20 - 40 Gew.-%, jeweils bezogen auf das Gesamtgewicht der Komponente (K1).

In einer weiteren Ausführung der Erfindung enthält die Komponente (K1) neben den erfindungsgemäßen Prepolymeren (A) mit Endgruppen der allgemeinen Formel (III) auch noch Prepolymere mit Endgruppen der allgemeinen Formel (VII)

-O-CO-NH-(CH₂)₃-SiR²₃₋ₓ(OR¹)ₓ (VII),

wobei alle Variablen R¹, R² und x die bei Formel (II) angegebene Bedeutung aufweisen. Die Mischungsverhältnisse zwischen beiden o. g. Prepolymertypen liegen dabei vorzugsweise zwischen 1:10 und 10:1, besonders bevorzugt zwischen 1:3 und 3:1, jeweils bezogen auf das Gewicht.

Die Komponente (K2) der erfindungsgemäßen zweikomponentigen Kleb- und Dichtstoffmasse enthält neben Wasser vorzugsweise Weichmacher und Füllstoffe.

Die Weichmacher (W), wie oben beschreiben, werden vorzugsweise in Konzentrationen von 0 - 98 Gew.-%, bevorzugt 30 - 90 Gew.-%, bezogen auf das Gesamtgewicht der Komponente (K2) eingesetzt.

Daneben kann die Komponente (K2) auch Füllstoffe (F), wie oben beschrieben, in Konzentrationen von vorzugsweise 10 - 70 Gew.-%, bevorzugt 30 - 60 Gew.-%, jeweils bezogen auf das Gesamtgewicht der Komponente (K2), enthalten.

Weiterhin kann die Komponente (K2) Verdickungsmittel (V) enthalten. Dabei handelt es sich vorzugsweise um wasserlösliche oder wasserquellbare Polymere oder um anorganische Verdickungsmittel. Beispiele für organische Verdickungsmittel (V) genannt seien Stärke, Dextrine, Oligosaccharide, Cellulose, Cellulosederivate wie Carboxymethylcellulose, Celluloseether, Methylcellulose, Hydroxyethylcellulose oder Hydroxypropylcellulose, Agar-agar, Alginate, Pektine, Gelatine, Carrageen, Tragant, Gummi arabicum, Casein, Polyacrylamid, Poly(meth)acrylsäurederivate, Polyvinylether, Polyvinylalkohole, Polyamide oder Polyimine. Beispiele für anorganische Verdickungsmittel sind Polykieselsäuren, pyrogene Kieselsäuren Alumosilicate oder Tonmineralien. Die bevorzugten Mengen der Verdickungsmittel liegen bei 0 - 10 Gew.-%, bezogen auf das Gesamtgewicht der Komponente (K2).

Ferner können weitere Rheologiehilfsmittel (R) wie oben beschrieben zugesetzt werden. Die Thixotropiermittel werden bevorzugt in Konzentrationen von 0 - 5 Gew.-%, bezogen auf das Gesamtgewicht der Komponente (K2), zugesetzt.

Wasser ist in der Komponente (K2) vorzugsweise in Mengen von 0,1 - 25 Gew.-%, bevorzugt 0,5 - 5 Gew.-%, jeweils bezogen auf das Gesamtgewicht der Komponente (K2)enthalten.

Daneben kann die Komponente (K2) prinzipiell auch Kondensationskatalysatoren (KK), Wasserfänger und Silanvernetzer (S), Haftvermittler (H), Stabilisatoren (St), Pigmente sowie weitere Additive enthalten. Dabei handelt es sich vorzugsweise um dieselben Materialien, die bereits als Zusätze zu der Komponente (K1) beschrieben worden sind.

In einer bevorzugten Ausführung der Erfindung werden die Komponenten (K1) und (K2) in einem Gewichtsverhältnis von vorzugsweise 1:30 bis 30:1, bevorzugt von 1:2 bis 20:1 und besonders bevorzugt in einem Verhältnis von 1:1,1 bis 11:1 gemischt.

Die erfindungsgemäßen Kleb- und Dichtstoffmassen sind für zahllose unterschiedliche Untergründe wie z.B. mineralische Untergründe, Metalle, Kunststoffe, Glas, Keramik, lackierte Oberflächen etc. geeignet.

Die erfindungsgemäßen Massen werden vorzugsweise verwendet zur Herstellung von Dichtungen oder zum Verkleben von verschiedenen Substraten.
Gegenstand der Erfindung sind daher Formkörper herstellbar durch Vermischen der Komponenten (K1) und (K2) gemäß einem der Ansprüche 1 bis 8, Auftragen der Mischung auf ein Substrat oder zwischen zwei oder mehrere Substrate und Härtenlassen der Mischung.
Bei den Formkörpern handelt es sich um eine Dichtung oder eine Verklebung von verschiedenen Substraten.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind soweit nicht anders angegeben, alle Mengen- und Prozentangaben auf das Gewicht bezogen.

### Beispiele

### Vergleichsversuch 1:

### Einkomponentige Formulierungen mit einem silanterminierten Polyether mit Dimethoxymethylsilylmethyl-carbamat-Endgruppen (GENIOSIL^{®} STP-E10):

202,5 g des silanterminierten Polyethers, erhältlich unter der Bezeichnung GENIOSIL^{®} STP-E10 bei der Wacker Chemie AG, werden in einem Laborplanetenmischer der Fa. PC-Laborsystem, ausgestatte mit zwei Balkenmischern bei ca. 25 °C mit 200 g Polypropylenglykol 2000 (Fa. Dow Chemical) und 20 g Vinyltrimethoxysilan, erhältlich unter der Bezeichnung GENIOSIL^{®} XL10 (Wacker Chemie AG), 2 Minuten bei 200 U/min vermischt. Danach werden 30 g einer hydrophoben Kieselsäure HDK^{®} H18 (Wacker Chemie AG) eingerührt bis sie homogen verteilt ist. Anschließend werden 540 g gemahlene Kreide Carbital C110 (Fa. Imerys) eingebracht und der Füllstoff unter Rühren eine Minute bei 600 U/min aufgeschlossen. Nach Einarbeitung der Kreide werden 7,5 g Aminopropyl-trimethoxysilan (GENIOSIL^{®} GF96 - Wacker Chemie AG) während 1 Minute bei 200 U/min verteilt, 2 Minuten bei 600 U/min und 1 Minute bei 200 U/min im Teilvakuum (ca. 100 mbar) homogenisiert und blasenfrei gerührt.
Die Formulierung wird in 310 ml PE-Kartuschen abgefüllt und einen Tag bei 25 °C gelagert. Die Hautbildungszeit (Topfzeit) wird, wie in Beispiel 1 beschrieben, bestimmt. Die Bestimmung der mechanischen Eigenschaften erfolgt nach DIN 53504 (Zugprüfung) und DIN 53505 (Härte Shore A), wie auch in Beispiel 1 beschrieben.
Die Ergebnisse sind in Tabelle 1 zusammengefasst.

**Tabelle 1:**

| | **Vergleichsversuch 1 1K-Reference** |
|---|---|
| **GENIOSIL STP-E10** | 20,25% |
| **PPG 2000 - Dow Chemical** | 20,0 % |
| **GENIOSIL XL 10** | 2,0 % |
| **HDK H18** | 3,0 % |
| **Carbital 110 - Imerys** | 54,0 % |
| **GENIOSIL GF 96** | 0,75 % |
| | 100,00% |
| | |
| **Hautbildungszeit** | 59 min |
| | |

| **Mechanische Eigenschaften nach 14 Tagen Härtung bei 23°C, 50% r. L.:** | |
|---|---|
| **Modul 100 %** | 1,76 |
| **Shore A** | 52 |
| **Reißdehnung** | 144 |
| **Reißfestigkeit** | 2,1 |

### Beispiel 1:

### Zweikomponentige Formulierungen mit einem silanterminierten Polyether mit Dimethoxymethylsilylmethyl-carbamat-Endgruppen (GENIOSIL^{®} STP-E10)

### Basiskomponente:

202,5 g des silanterminierten Polyethers (mit Endgruppen der Formel (II) mit R¹=Methylrest, R²=Methylrest, x=2 und y=1), erhältlich unter der Bezeichnung GENIOSIL^{®} STP-E10 bei der Wacker Chemie AG, werden in einem Laborplanetenmischer der Fa. PC-Laborsystem, ausgestatte mit zwei Balkenmischern bei ca. 25 °C mit 20 g Vinyltrimethoxysilan, erhältlich unter der Bezeichnung GENIOSIL^{®} XL10 (Wacker Chemie AG), 1 Minuten bei 200 U/min vermischt. Danach werden 30 g einer hydrophoben Kieselsäure HDK^{®} H18 (Wacker Chemie AG) eingerührt bis sie homogen verteilt ist. Anschießend werden 250 g gemahlene Kreide Carbital C110 (Fa. Imerys) eingebracht und der Füllstoff unter Rühren eine Minute bei 600 U/min aufgeschlossen. Nach Einarbeitung der Kreide werden 7,5 g Aminopropyltrimethoxysilan (GENIOSIL^{®} GF96 - Wacker Chemie AG) während 1 Minute bei 200 U/min verteilt, 2 Minuten bei 600 U/min und 1 Minute bei 200 U/min im Teilvakuum (ca. 100 mbar) homogenisiert und blasenfrei gerührt.
Die Formulierung wird in PE-Kartuschen abgefüllt und einen Tag bei 25 °C gelagert.

### Härterkomponente:

200 g Polypropylenglykol 2000 (Fa. Dow Chemical) werden mit 290 g gemahlener Kreide Carbital C110 (Fa. Imerys) im Planetenmischer eingebracht und unter Rühren eine Minute bei 600 U/min aufgeschlossen. Anschließend werden 10 g destilliertes Wasser 1 Minute bei 200 U/min eingerührt, 2 Minuten bei 600 U/min und 1 Minute bei 200 U/min im Teilvakuum (ca. 100 mbar) homogenisiert und blasenfrei gerührt. Die Formulierung wird in PE-Kartuschen abgefüllt und einen Tag bei 25 °C gelagert.

### Mischung und Vulkanisation:

Die beiden Komponenten werden im Verhältnis 1:1 in den Mischbecher eingewogen und bei 2000 U/min für 1 min im Speedmixer der Fa. Hauschild homogenisiert. Die Topfzeit dieser Mischung wird im Mischbecher mit Hilfe eines Metallspatels bestimmt. Der Zeitpunkt bis zum Abriss der Masse vom Spatel wird ermittelt.

### Bestimmung der mechanischen Eigenschaften:

Die Proben werden auf ausgefräßten Teflonplatten mit 2 mm Tiefe ausgestrichen und 14 Tage bei 23°C, 50% relative Luftfeuchte (r. L.) gehärtet. Die mechanischen Eigenschaften werden nach DIN 53504 (Zugprüfung) und DIN 53505 (Härte Shore A) bestimmt. Die Ergebnisse sind in Tabelle 2 zusammengefasst.

**Tabelle 2:**

| | **Beispiel 1 2K-Formulierung (1:1)** | |
|---|---|---|
| | **Basis** | **Härter** |
| **GENIOSIL STP-E10** | 20,25% | - |
| **PPG 2000 - Dow Chemical** | - | 20,0 % |
| **GENIOSIL XL 10** | 2,0 % | - |
| **HDK H18** | 2,0 % | - |
| **Carbital 110 - Imerys** | 25,0 % | 29,0 % |
| **dest. Wasser** | - | 1 % |
| **GENIOSIL GF 96** | 0,75% | - |
| | 50,0 % | 50,0 % |
| | | |
| **Topfzeit** | 23 min | |
| | | |

| **Mechanische Eigenschaften nach 14 Tagen Härtung bei 23°C, 50% r. L.:** | | |
|---|---|---|
| **Modul 100 %** | 1,69 | |
| **Shore A** | 46 | |
| **Reißdehnung** | 135 | |
| **Reißfestigkeit** | 2,0 | |

### Beispiel 2:

### Zweikomponentige Formulierungen mit einem silanterminierten Polyether mit Dimethoxymethylsilylmethyl-carbamat-Endgruppen (GENIOSIL^{®} STP-E10)

Analog Beispiel 1 mit veränderter Härterkomponente und Mischungsverhältnis. Die Härterkomponente wird durch Einrühren von 20 g destilliertem Wasser in 100 g Polypropylenglykol 2000 erhalten. In der Basiskomponente wird statt der HDK^{®} H18 hydrophile Kieselsäure HDK^{®} V15 und ein geringfügig anderes Mischungsverhältnis eingesetzt.
Die Basis- und Härterkomponente wird jeweils in PE-Kartuschen abgefüllt und einen Tag bei 25°C gelagert.
Die Topfzeit und die mechanischen Eigenschaften werden, wie in Beispiel 1 beschrieben, bestimmt.
Die Ergebnisse sind in Tabelle 3 zusammenfasst.

**Tabelle 3:**

| | **Beispiel 2 2K-Formulierung (ca. 7:1)** | |
|---|---|---|
| | **Basis** | **Härter** |
| **GENIOSIL STP-E10** | 25 % | - |
| **PPG 2000 - Dow Chemical** | - | 10 % |
| **GENIOSIL XL 10** | 2 % | |
| **HDK V 15** | 2 % | |
| **Carbital 110 - Imerys** | 57 % | |
| **dest. Wasser** | - | 2 % |
| **GENIOSIL GF 96** | 2 % | |
| | 88 % | 12 % |
| | | |
| **Topfzeit** | 4 min | |
| | | |

| **Mechanische Eigenschaften nach 14 Tagen Härtung bei 23°C, 50% r.L.:** | | |
|---|---|---|
| **Modul 100 %** | 2,3 | |
| **Shore A** | 57 | |
| **Reißdehnung** | 110 | |
| **Reißfestigkeit** | 2,5 | |

### Beispiel 3:

### Zweikomponentige Formulierungen mit einem silanterminierten Polyether mit Trimethoxysilylpropyl-carbamat-Endgruppen (GENIOSIL^{®} STP-E15)

Es wird eine Mischung analog Beispiel 1 hergestellt, wobei der silanterminierte Polyether GENIOSIL^{®} STP-E10 durch den silanterminierten Polyether GENIOSIL^{®} STP-E15 (mit Endgruppen der Formel (II) mit R¹=Methylrest, x=3 und y=3), erhältlich bei der Wacker Chemie AG, ersetzt wird.
Die Basis- und Härterkomponente wird jeweils in PE-Kartuschen abgefüllt und einen Tag bei 25°C gelagert.
Die Topfzeit und die mechanischen Eigenschaften werden, wie in Beispiel 1 beschrieben, bestimmt.
Die Ergebnisse sind in Tabelle 4 zusammengefasst.

**Tabelle 4:**

| | **Beispiel 3 2K-Formulierung (1:1)** | |
|---|---|---|
| | **Basis** | **Härter** |
| **GENIOSIL STP-E15** | 20,25% | - |
| **PPG 2000 - Dow Chemical** | - | 20,0% |
| **GENIOSIL XL 10** | 2,0 % | |
| **HDK H18** | 2,0 % | |
| **Carbital 110 - Imerys** | 25,0 % | 29,0% |
| **dest. Wasser** | - | 1 % |
| **GENIOSIL GF 96** | 0,75% | - |
| | 50,0 % | 50,0 % |
| | | |
| **Topfzeit** | > 4 h | |
| | | |

| **Mechanische Eigenschaften nach 14 Tagen Härtung bei 23°C, 50% r. L.:** | | |
|---|---|---|
| **Modul 100 %** | - | |
| **Shore A** | 50 | |
| **Reißdehnung** | 95 | |
| **Reißfestigkeit** | 1,5 | |

### Vergleichsversuch 2:

### Zweikomponentige Formulierungen mit einem silanterminierten Polyether mit Dimethoxymethylsilylpropyl-Endgruppen (MS-Polymer S303H)

Es wurde eine Mischung analog Beispiel 1 hergestellt, wobei anstelle des silanterminierten Polyethers mit Dimethoxymethylsilylpropyl-carbamat-Endgruppen (GENIOSIL^{®} STP-E10) ein "MS-Polymer", ein silanterminierter Polyether mit Dimethoxymethylsilylpropyl-Endgruppen (MS-Polymer S303H, erhältlich bei der Fa. Kaneka) verwendet wird.
Die Basis- und Härterkomponente wird jeweils in PE-Kartuschen abgefüllt und einen Tag bei 25°C gelagert. Die Topfzeit wird, wie in Beispiel 1 beschrieben, bestimmt.
Die Ergebnisse sind in Tabelle 5 zusammengefasst.

Die Topfzeit ist sehr lang und die Masse war auch nach 7 Tagen nicht ausgehärtet, so dass die mechanischen Eigenschaften nicht bestimmt werden konnten.

**Tabelle 5:**

| | **Vergleichsversuch 2 2K-Formulierung (1:1)** | |
|---|---|---|
| | **Basis** | **Härter** |
| **MS-Polymer S303H** | 20,25% | - |
| **PPG 2000 - Dow Chemical** | - | 20,0% |
| **GENIOSIL XL 10** | 2,0 % | - |
| **HDK H18** | 2,0 % | - |
| **Carbital 110 - Imerys** | 25,0 % | 29,0% |
| **dest. Wasser** | - | 1 % |
| **GENIOSIL GF 96** | 0,75% | - |
| | 50,0 % | 50,0 % |
| | | |
| **Topfzeit** | > 24 h | |
| | | |

| **Mechanische Eigenschaften nach 14 Tagen Härtung bei 23°C, 50% r. L.:** | | |
|---|---|---|
| **Modul 100 %** | Mechanische Eigenschaften nicht bestimmbar, Produkt ist auch nach 7 Tagen nicht ausgehärtet. | |
| **Shore A** | | |
| **Reißdehnung** | | |
| **Reißfestigkeit** | | |

### Beispiel 4:

### Zweikomponentige Formulierungen mit einem silanterminierten Polyether mit Dimethoxymethylsilylmethyl-carbamat-Endgruppen (GENIOSIL^{®} STP-E10).

### Untersuchung der Lagerstabilität der Komponenten:

Analog zu Beispiel 1 wurden weitere Mischungen unter Zusatz weiterer Komponenten hergestellt und untersucht:
GENIOSIL^{®} GF80 - Glycidoxypropyl-trimethoxysilan (Fa. Wacker Chemie AG)
TINUVIN B75 - Stabilisatormischung der Fa. Ciba
Mischung, Verarbeitung und Bestimmung der Topfzeit und der mechanischen Eigenschaften erfolgt wie oben unter Bespiel 1 beschrieben.
Die Basiskomponenten A1 und A2 und die Härterkomponente B wurden weiterhin 4 Wochen bei 70°C geschlossen vorgelagert. Die Ergebnisse sind in der Tabelle 6 zusammengefasst.
Die Härtung der Massen ergab keine nennenswerten Veränderungen der mechanischen Eigenschaften und der Topfzeiten nach einer 4-wöchigen Vorlagerung bei 70°C der Basiskomponenten und der Härterkomponente.

**Tabelle 6a:**

| **Basiskomponente** | **A1** | **A2** |
|---|---|---|
| **GENIOSIL STP-E10** | 175,00 g | 172,50 g |
| **PPG 2000 - Dow Chemical** | 10,00 g | 10,00 g |
| **GENIOSIL XL 10** | 11,50 g | 11,50 g |
| **GENIOSIL GF 80** | **-** | 5,00 g |
| **Carbital 110 - Imerys** | 280,00 g | 277,50 g |
| **HDK H18** | 15,00 g | 15,00 g |
| **TINUVIN B75 - Ciba** | 1,00 g | 1,00 g |
| **GENIOSIL GF 96** | 7,50 g | 7,50 g |

| **Härterkomponente** | **B** | |
|---|---|---|
| **PPG 2000 - Dow Chemical** | 485,00 g | |
| **Dest. Wasser** | 15,00 g | |

**Tabelle 6b:**

| **Mischung** | **M1: 5:1** | **M2: 2:1** | **M3: 5:1** | **M4: 2:1** |
|---|---|---|---|---|
| **A1** | 83,33 g | 66,67 g | - | - |
| **A2** | - | - | 83,33 g | 66,67 g |
| **B** | 16,67 g | 33,33 g | 16,67 g | 33,33 g |

**Tabelle 6c:**

| **Topfzeit** | **M1:** | **M2:** | **M3:** | **M4:** |
|---|---|---|---|---|
| Topfzeit bei 25°C | 29 Min. | 25 Min. | 28 Min. | 26 Min. |
| Topfzeit bei 25°C - 4 Wo. bei 70°C gelagert | - | 26 Min. | - | 57 Min. |

| **Mechan. Eigenschaften nach 7 Tagen Härtung bei 23°C:** | | | | |
|---|---|---|---|---|
| Shore A | 49 | 25 | 51 | 29 |
| Modul 100% | 1,94 N/mm² | 0,51 N/mm² | - | 0,71 N/mm² |
| Reißfestigkeit | 3,1 N/mm² | 1, 7 N/mm² | 1,9 N/mm² | 1, 5 N/mm² |
| Reißdehnung | 175% | 277% | 91% | 168% |

| **Mechan. Eigenschaften nach 2 Wochen Härtung bei 23°C + 4 Wochen Vorlagerung bei 70°C:** | | | | |
|---|---|---|---|---|
| Shore A | - | 24 | - | 27 |
| Modul 100% | - | 0,54 N/mm² | - | 0,93 N/mm² |
| Reißfestigkeit | - | 1,6 N/mm² | - | 1,2 N/mm² |
| Reißdehnung | - | 276% | - | 116% |

## Patentansprüche

1. Zweikomponentige Kleb- oder Dichtstoffmassen (K) mit einer ersten Komponente (K1) enthaltend
silanterminierte Prepolymere (A), die Endgruppen der allgemeinen Formel (II)
-O-CO-NH-(CH₂)_{y}-SiR²₃₋ₓ(OR¹)ₓ (II)
aufweisen, wobei
**R¹** und **R²** unabhängig voneinander Kohlenwasserstoffreste mit 1-18 Kohlenstoffatomen oder ω-Oxaalkyl-alkylreste mit insgesamt 2-20 Kohlenstoffatomen bedeuten,
**x** 2 oder 3 bedeutet und
**y** eine Zahl von 1 bis 10 bedeutet,
und einer zweiten Komponente (K2) enthaltend Wasser,
mit der Maßgabe, dass mindestens 50% aller Prepolymermoleküle (A) im Rückgrat der Prepolymerkette keine zusätzlichen Urethan- oder Harnstoffeinheiten aufweisen und dass mehr als 85% aller Kettenenden mit Silanfunktionen terminiert sind.

2. Zweikomponentige Kleb- oder Dichtstoffmassen (K) nach Anspruch 1, **dadurch gekennzeichnet, dass** die Prepolmere (A) unverzweigte Polyether mit Endgruppen der Formel (II) gemäß Anspruch 1 sind.

3. Zweikomponentige Kleb- oder Dichtstoffmassen (K) nach Anspruch 1 oder 2, **dadurch gekennzeichnet, dass** in Formel (II) y den Wert 1 hat.

4. Zweikomponentige Kleb- oder Dichtstoffmassen (K) nach Anspruch 1, 2 oder 3, **dadurch gekennzeichnet, dass** die erste Komponente (K1) weitere Bestandteile ausgewählt aus der Gruppe von Kondensationskatalysatoren (KK), Wasserfänger und Silanvernetzer (S), Füllstoffe (F), Weichmacher (W), Haftvermittler (H), Rheologiehilfsmittel (R) und Stabilisatoren (St), Farbpigmente, weitere übliche Hilf- und Zusatzstoffe und deren Mischungen enthält.

5. Zweikomponentige Kleb- oder Dichtstoffmassen (K) nach einem der Ansprüche 1 bis 4, **dadurch gekennzeichnet, dass** die Massen frei von schwermetallhaltigen Katalysatoren (KK) sind.

6. Zweikomponentige Kleb- oder Dichtstoffmassen (K) nach einem der Ansprüche 1 bis 4, **dadurch gekennzeichnet, dass** die Massen frei von Zinnkatalysatoren (KK) sind.

7. Zweikomponentige Kleb- oder Dichtstoffmassen (K) nach einem der Ansprüche 1 bis 6, **dadurch gekennzeichnet, dass** die zweite Komponente (K2) Weichmacher (W) enthält.

8. Zweikomponentige Kleb- oder Dichtstoffmassen (K) nach einem der Ansprüche 1 bis 7, **dadurch gekennzeichnet, dass** die zweite Komponente (K2) Füllstoffe (F) enthält.

9. Formkörper herstellbar durch Vermischen der Komponenten (K1) und (K2) gemäß einem der Ansprüche 1 bis 8, Auftragen der Mischung auf ein Substrat oder zwischen zwei oder mehrere Substrate und Härtenlassen der Mischung.

## Claims

1. Two-component adhesive or sealing compounds (K) comprising a first component (K1) comprising silane-terminated prepolymers (A) having end groups of the general formula (II)
**-O-CO-NH-(CH₂)_{y}-SiR²₃₋ₓ(OR¹)ₓ** **(II)**
where
**R¹** and **R²** are each independently hydrocarbyl radicals having 1-18 carbon atoms or ω-oxaalkylalkyl radicals having a total of 2-20 carbon atoms,
**x** is 2 or 3 and
**y** is a number from 1 to 10,
and a second component (K2) comprising water,
with the proviso that at least 50% of all prepolymer molecules (A) do not have any additional urethane or urea units in the backbone of the prepolymer chain, and that more than 85% of all chain ends are terminated by silane functions.

2. Two-component adhesive or sealing compounds (K) according to Claim 1, **characterized in that** the prepolymers (A) are unbranched polyethers with end groups of the formula (II) according to Claim 1.

3. Two-component adhesive or sealing compounds (K) according to Claim 1 or 2, **characterized in that** y in formula (II) has the value of 1.

4. Two-component adhesive or sealing compounds (K) according to Claim 1, 2 or 3, **characterized in that** the first component (K1) comprises further constituents selected from the group of condensation catalysts (KK), water scavengers and silane crosslinkers (S), fillers (F), plasticizers (W), adhesion promoters (H), rheology aids (R) and stabilizers (St), color pigments, further customary assistants and additives, and mixtures thereof.

5. Two-component adhesive or sealing compounds (K) according to any of Claims 1 to 4, **characterized in that** the compounds are free of heavy metal-containing catalysts (KK).

6. Two-component adhesive or sealing compounds (K) according to any of Claims 1 to 4, **characterized in that** the compounds are free of tin catalysts (KK).

7. Two-component adhesive or sealing compounds (K) according to any of Claims 1 to 6, **characterized in that** the second component (K2) comprises plasticizers (W).

8. Two-component adhesive or sealing compounds (K) according to any of Claims 1 to 7, **characterized in that** the second component (K2) comprises fillers (F).

9. Molding producible by mixing components (K1) and (K2) according to any of Claims 1 to 8,
applying the mixture to a substrate or between two or more substrates and
allowing the mixture to cure.

## Revendications

1. Matières adhésives ou d'étanchéité (K) à deux composants, comportant un premier composant (K1) contenant des prépolymères à terminaison silane (A), qui comportent des groupes terminaux de formule générale (II)
-O-CO-NH-(CH₂)_{y}-SiR²₃₋ₓ(OR¹)ₓ (II)
dans laquelle
**R¹** et **R²** représentent indépendamment l'un de l'autre des radicaux hydrocarbonés ayant 1-18 atomes de carbone ou des radicaux ω-oxaalkyl-alkyle ayant au total 2-20 atomes de carbone,
**x** représente 2 ou 3 et
**y** représente un nombre valant de 1 à 10,
et un second composant (K2) contenant de l'eau,
étant entendu qu'au moins 50 % de toutes les molécules de prépolymère (A) dans le squelette de la chaîne de prépolymère ne comportent pas d'unités uréthane ou urée supplémentaires et que plus de 85 % de toutes les extrémités de chaîne sont terminées par des fonctions silane.

2. Matières adhésives ou d'étanchéité (K) à deux composants selon la revendication 1, **caractérisées en ce que** les prépolymères (A) sont des polyéthers non ramifiés à groupes terminaux de formule (II) selon la revendication 1.

3. Matières adhésives ou d'étanchéité (K) à deux composants selon la revendication 1 ou 2, **caractérisées en ce que** dans la formule (II) y a la valeur 1.

4. Matières adhésives ou d'étanchéité (K) à deux composants selon la revendication 1, 2 ou 3, **caractérisées en ce que** le premier composant (K1) contient d'autres constituants choisis dans le groupe des catalyseurs de condensation (KK), absorbeurs d'eau et agents de réticulation silane (S), charges (F), plastifiants (W), promoteurs d'adhérence (H), adjuvants de rhéologie (R) et stabilisants (St), pigments colorés, d'autres additifs et adjuvants usuels et des mélanges de ceux-ci.

5. Matières adhésives ou d'étanchéité (K) à deux composants selon l'une quelconque des revendications 1 à 4, **caractérisées en ce que** les matières sont exemptes de catalyseurs (KK) contenant des métaux lourds.

6. Matières adhésives ou d'étanchéité (K) à deux composants selon l'une quelconque des revendications 1 à 4, **caractérisées en ce que** les matières sont exemptes de catalyseurs à l'étain (KK).

7. Matières adhésives ou d'étanchéité (K) à deux composants selon l'une quelconque des revendications 1 à 6, **caractérisées en ce que** le second composant (K2) contient des plastifiants (W).

8. Matières adhésives ou d'étanchéité (K) à deux composants selon l'une quelconque des revendications 1 à 7, **caractérisées en ce que** le second composant (K2) contient des charges (F).

9. Corps moulé pouvant être produit par mélange des composants (K1) et (K2) selon l'une quelconque des revendications 1 à 8, application du mélange sur un support ou entre deux ou plus de deux supports et étape consistant à laisser durcir le mélange.
